# EUROPÄISCHE PATENTANMELDUNG

(11) **EP 1 338 196 A2**
(43) Veröffentlichungstag der Anmeldung: **27.08.2003**
(21) Anmeldenummer: 03002279.2
(22) Anmeldetag: 02.02.2003
(51) Int. Cl.: A01K 1/015

(54) **Verfahren zur Herstellung von Katzenstreu aus tonhaltigen Materialien mit einem hohen Kohleanteil.**

(30) Priorität: 08.02.2002 DE 10205265
(71) Anmelder: Morgenstern, Ingo, Prof. Dr., 66606 St. Wendel (DE); Däges, Johannes, Dr., 66125 Dudweiler (DE); Weyrich, Lothar, 66606 St.Wendel (DE)
(72) Erfinder: Morgenstern, Ingo, Prof. Dr., 66606 St. Wendel (DE); Däges, Johannes, Dr., 66125 Dudweiler (DE); Weyrich, Lothar, 66606 St.Wendel (DE)

(57) **Zusammenfassung**

Verfahren zur Herstellung von Tierstreu, insbesondere Katzenstreu, vorzugsweise aus Flotationsberge mit einem hohen Tonanteil. Analoges Verfahren zur Herstellung von Tonfiltern zur Trinkwasseraufbereitung in Dritte Welt Ländern.

## Beschreibung

In der Patentschrift DE 197 28 460 A1 wird die Herstellung von Tierstreu aus Flotationsberge beschrieben. Das Verfahren konzentriert sich auf Flotationsberge, "die im Wesentlichen aus Schiefer und/oder Konglomerat besteht". Außerdem ist ein Kohlenanteil von 10% angegeben. Weiterführende Forschungsarbeiten haben nun ergeben, dass in großen Gebieten der ehemaligen Saarbergwerke AG und der lothringischen HBL ein großer, in manchen Fällen dominierender Tonanteil vorliegt. Auch sind Kohleanteile von 20% bis über 50% anzutreffen. Gerade der hohe Tonanteil ist für das Klumpverhalten der Katzen- bzw. Tierstreu ausschlaggebend. Weiterhin erlaubt der Tonanteil die Herstellung weiterer Produkte, die im Wesentlichen auf der Einlagerung von Kapillaren in einen Tonkörper beruhen. Die Spannweite reicht von blähtonartigen Materialien bis hin zu keramischen Filtern für die verschiedensten Zwecke. Das Herstellungsverfahren beruht darauf, dass das tonhaltige Material mit einem hohen Kohleanteil, im Idealfall Flotationsberge, so weit erhitzt wird, dass am Ende des Prozesses gebrannter Ton vorliegt. Die eingelagerte Kohle wird verbrannt. Dadurch entstehen die Kapillaren im Tonkörper, die die Saugfähigkeit des Materials ergeben, darüber hinaus aber bei geeigneter Querschnittsverteilung auch Filtereigenschaften hervorrufen. Mit Hilfe eines vorgeschalteten Mahl- und Mischprozesses lässt sich die Kapillarenverteilung (Querschnittsgröße, Anzahl) entsprechend den Anforderungen des Endproduktes steuern. Gegenüber bekannten Verfahren ergibt sich der weitere wesentliche Vorteil, dass die Kapillarenbildung im Wesentlichen auf der Kohleeinlagerung beruht. Damit wird die Verbrennungsenergie der eingelagerten Kohleanteile zur Deckung der Prozesswärme herangezogen. Damit ist das neue Verfahren weitaus kostengünstiger als die bekannten Verfahren. Die Kostensenkung beruht natürlich auf dem zugrunde liegenden Kohleanteil. Damit läuft der gesamte Brennprozess fast ohne äußere Energiezufuhr ab. Im Falle von keramischen Filtern, insbesondere für die Trinkwasserreinigung in Dritte Welt Ländern muss der Kohleanteil wegen des Perkolationsverhaltens entsprechend verändert werden. Während sich für die Tierstreuproduktion insbesondere Drehrohröfen anbieten, ist für die Filterherstellung auf herkömmliche Brennverfahren (z.B. Tunnelöfen) zurückzugreifen.

## Patentansprüche

1. Verfahren zur Herstellung von Tierstreu, insbesondere Katzenstreu, **dadurch gekennzeichnet, dass** für den Brennvorgang tonhaltiges Material mit einem hohen Kohleanteil verwendet wird.

2. Verfahren nach 1. **dadurch gekennzeichnet, dass** vorzugsweise Flotationsberge mit einem hohen Tonanteil verwendet wird.

3. Verfahren nach 1. und/oder 2 **dadurch gekennzeichnet, dass** der Kohleanteil in der Nähe der Perkolationsschwelle liegt.

4. Verfahren nach 3. **dadurch gekennzeichnet, dass** der Kohleanteil durch Misch- und Mahlverfahren verändert wird.

5. Verfahren nach 1. bis 4. **dadurch gekennzeichnet, dass** die Kapillarenverteilung mit Hilfe der durch Mahl- und Mischvorgänge zu beeinflussenden Kohleverteilung gesteuert wird.

6. Verfahren nach 5. **dadurch gekennzeichnet, dass** die Kapillarenverteilung für das Endprodukt charakteristische Eigenschaften hervorruft.

7. Verfahren nach 6. **dadurch gekennzeichnet, dass** durch Veränderung des Ton- bzw. Kohleanteils Tonprodukte mit großer Saugwirkung hergestellt werden.

8. Verfahren nach 6. und 7. **dadurch gekennzeichnet, dass** durch Veränderung des Ton- bzw. Kohleanteils keramische Filter mit verschiedensten Eigenschaften hergestellt werden.

9. Verfahren nach 8. **dadurch gekennzeichnet, dass** durch die Veränderung des Ton- bzw. Kohleanteils extrem kostengünstige Tonfilter zur Trinkwasseraufbereitung insbesondere in Dritte Welt Ländern hergestellt werden.
